# EUROPÄISCHE PATENTSCHRIFT

(11) **EP 2 561 270 B1**
(45) Veröffentlichungstag und Bekanntmachung des Hinweises auf die Patenterteilung: **14.02.2018**
(21) Anmeldenummer: 11713245.6
(22) Anmeldetag: 04.04.2011
(51) Int. Cl.: F21V 11/14, F21K 99/00

(54) **FLÄCHENLICHTQUELLE**
SURFACE LIGHT SOURCE
SOURCE DE LUMIÈRE PLANE

(30) Priorität: 23.04.2010 DE 102010018030
(43) Veröffentlichungstag der Anmeldung: 27.02.2013
(73) Patentinhaber: OSRAM Opto Semiconductors GmbH, 93055 Regensburg (DE)
(72) Erfinder: BRICK, Peter, 93051 Regensburg (DE); FRANK, Joachim, 96450 Coburg (DE); HILLER, Uli, 93077 Bad Abbach (DE); KAISER, Stephan, 93049 Regensburg (DE); KUHN, Gerhard, 93096 Köfering (DE); MARKYTAN, Ales, 93055 Regensburg (DE); MUSCHAWECK, Julius, 82131 Gauting (DE); NEUGIRG, Christian, 93053 Regensburg (DE)
(74) Vertreter: Epping - Hermann - Fischer
(86) Internationale Anmeldenummer: PCT/EP2011/055203
(87) Internationale Veröffentlichungsnummer: WO 2011/131476

(56) Entgegenhaltungen:
- WO-A1-2004/090586
- JP-A- 8 241 051
- US-A1- 2009 003 002

## Beschreibung

Die vorliegende Erfindung betrifft eine Flächenlichtquelle.

Die Druckschriften JP 8-241051, US 2009/0003002 und WO 2004/090586 offenbaren verschiedene Flächenlichtquellen.

Aufgabe der vorliegenden Erfindung ist es, eine Flächenlichtquelle anzugeben, die zur Allgemeinbeleuchtung geeignet ist und einen Glitzer-Effekt aufweist.

Diese Aufgabe wird durch eine Flächenlichtquelle mit den Merkmalen des Patentanspruchs 1 gelöst.

Eine solche Flächenlichtquelle umfasst insbesondere:
- mindestens einen Halbleiterkörper, der im Betrieb elektromagnetische Strahlung von seiner Vorderseite emittiert, und
- Auskoppelstrukturen, die dazu geeignet sind, eine lokale Änderung der Leuchtdichte auf einer Leuchtfläche der Flächenlichtquelle zu erzeugen, so dass die Leuchtdichte in zumindest einem Leuchtbereich gegenüber einem Hintergrundbereich erhöht ist.

Die lokale Änderung der Leuchtdichte auf der Leuchtfläche der Flächenlichtquelle erzeugt bevorzugt einen Glitzer-Effekt für das menschliche Auge.

Eine Idee ist es, das von dem Halbleiterkörper ausgesandte Licht mit Hilfe der Auskoppelstrukturen, punktuell derart auszukoppeln, dass die Leuchtfläche Leuchtbereiche aufweist, in denen die Leuchtdichte lokal sowie bevorzugt auch in Abhängigkeit des Betrachtungswinkels vergleichsweise stark variiert. Hierzu sind die Auskoppelstrukturen zweckmäßigerweise asymmetrisch entlang der Leuchtfläche verteilt. Besonders bevorzugt weisen die Auskoppelstrukturen im Leuchtbereich eine besonders hohe Konzentration auf, während die Konzentration der Auskoppelstrukturen im Hintergrundbereich eher niedrig ist.

Besonders bevorzugt ist der Hintergrundbereich nicht vollständig dunkel, sondern weist ebenfalls eine Leuchtdichte auf, die bevorzugt möglichst homogen ausgebildet ist. Bevorzugt weist der Hintergrundbereich eine Leuchtdichte auf, die größer oder gleich 10 cd/m² ist. Das Verhältnis eines lokalen Maximums der Leuchtdichte zu einem lokalen Minimum der Leuchtdichte Lₘₐₓ/Lₘᵢₙ im Hintergrundbereich ist bevorzugt nicht größer als zwei.

Gemäß einer Ausführungsform der Flächenlichtquelle sind weitere Auskoppelstrukturen dazu vorgesehen, die Abstrahlcharakteristik innerhalb des Hintergrundbereichs der Leuchtfläche zu homogenisieren.

Gemäß einer Ausführungsform der Flächenlichtquelle ist die strahlungsemittierende Vorderseite des Halbleiterkörpers parallel zu der Leuchtfläche der Flächenlichtquelle angeordnet. Diese Ausführungsform wird auch als "direkte Hinterleuchtung" bezeichnet.

Bei einer Flächenlichtquelle mit direkter Hinterleuchtung ist eine Streuscheibe zwischen der strahlungsemittierenden Vorderseite des Halbleiterkörpers und der Leuchtfläche angeordnet, wobei die Auskoppelstrukturen in die Streuscheibe eingebracht sind. Die Streuscheibe hat die Aufgabe, Licht des Halbleiterkörpers, das auf die Streuscheibe auftrifft, im Hintergrundbereich zu homogenisieren. In den Bereichen, in denen die Auskoppelstrukturen in die Streuscheibe eingebracht sind, wird hingegen verstärkt Licht ausgekoppelt, so dass zumindest ein Leuchtbereich entsteht. Die Auskoppelstrukturen weisen hierbei bevorzugt Größenordnungen im Bereich der Dicke der Streuscheibe auf.

Die Auskoppelstrukturen können beispielsweise durch Löcher in der Streuscheibe gebildet sein. Diese sind besonders bevorzugt im Bereich des Halbleiterkörpers angeordnet. Beispielsweise sind die Löcher über der strahlungsemittierenden Vorderseite des Halbleiterkörpers angeordnet, so dass Licht, das von dem Halbleiterkörper emittiert wird, durch die Löcher direkt zum Betrachter hindurch treten kann. Bevorzugt sind die Löcher auf konzentrischen Kreisen um den Halbleiterkörper angeordnet. Weiterhin können die Löcher auch periodisch oder zufällig über die Streuscheibe verteilt sein.

Die Löcher in der Streuscheibe können beispielsweise zylindrisch, kegelförmig oder kegelstumpfförmig ausgebildet sein.

Weiterhin sind die Löcher besonders bevorzugt derart in der Streuscheibe angeordnet, dass eine Rotationsachse des jeweiligen Lochs die Mittelachse des Halbleiterkörpers schneidet. Besonders bevorzugt sind mehrere Löcher derart in der Streuscheibe angeordnet, dass sich ihre Rotationsachsen in einem der Punkt der Mittelachse schneiden. Bei dieser Ausführungsform sind die Löcher in verschiedenen Winkeln zur Mittelachse des Halbleiterkörpers angeordnet. Hierdurch kann bevorzugt eine starke Änderung der Leuchtdichte in Abhängigkeit des Betrachtungswinkels erzeugt werden.

Gemäß einer Ausführungsform der Flächenlichtquelle mit direkter Hinterleuchtung ist der Halbleiterkörper in einen Lichtleiter eingebettet, wobei die Auskoppelstrukturen auf der zur Leuchtflächen weisenden Seite des Lichtleiters im Bereich der strahlungsemittierenden Vorderseite des Halbleiterkörpers angeordnet sind. In der Regel ist aus fertigungstechnischen Gründen ein Luftspalt zwischen Halbleiterkörper und Lichtleiter vorhanden. Dieser ist in der Regel zwischen 5 um und 1000 µm breit, bevorzugt zwischen 5 um und 100 µm breit, wobei jeweils die Grenzen eingeschlossen sind. Weiterhin kann der Spalt zwischen dem Halbleiterkörper und dem Lichtleiter auch mit einem Kleber, einem Silikonmaterial oder einem Epoxidmaterial gefüllt sein.

Hierbei können die Auskoppelstrukturen beispielsweise durch eines der folgenden Elemente gebildet sein: Zylindrische Ausnehmungen, pyramidenförmige Ausnehmungen, kegel- oder kegelstumpfförmige Ausnehmungen, zylindrische Löcher, pyramidenförmige Löcher, kegel- oder kegelstumpfförmige Löcher, Aufrauung, abbildende Strukturen, wie beispielsweise Fresnel-Strukturen. Die Auskoppelstrukturen weisen hierbei bevorzugt Größenordnungen im Bereich der Dicke des Lichtleiters auf.

Sind bei der Flächenlichtquelle Elemente als Auskoppelstrukturen verwendet, die eine Rotationsachse aufweisen, wie beispielsweise zylindrische, kegelförmige oder kegelstumpfförmige Licht oder Ausnehmungen, die beispielsweise in dem Lichtleiter oder der Streuscheibe angeordnet sind, so ist die Rotationsachse der Elemente bevorzugt schräg, dass heißt in einem Winkel ungleich 90°, zur Leuchtfläche der Flächenlichtquelle angeordnet. Auf diese Art und Weise kann insbesondere bei einer Flächenlichtquelle mit direkter Hinterleuchtung Leuchtbereiche geschaffen werden, deren Leuchtdichte sich stark mit dem Betrachtungswinkel ändert.

Gemäß einer weiteren Flächenlichtquelle ist der Halbleiterkörper seitlich der Leuchtfläche angeordnet und koppelt in einen Lichtleiter ein. Diese Anordnung wird auch als "indirekte Hinterleuchtung" bezeichnet.
Bei einer Flächenlichtquelle mit indirekter Hinterleuchtung können die Auskoppelstrukturen beispielsweise durch Streustellen, wie beispielsweise Diffusorpartikel, Leerstellen, luftgefüllte Partikel, Defekte oder Streugeometrien innerhalb des Lichtleiters gebildet sein.

Die Auskoppelstrukturen können hierbei beispielsweise durch linienförmige Bereiche hoher Konzentration an Streustellen, wie Diffusorpartikeln oder auch Leerstellen, luftgefüllte Partikel, Defekte oder Streugeometrien, in dem Lichtleiter ausgebildet sein. Diese linienförmigen Bereiche sind besonders bevorzugt leicht versetzt zur Hauptstrahlachse des Halbleiterkörpers angeordnet, um die Homogenität der Abstrahlcharakteristik der Flächenlichtquelle im Hintergrundbereich zu erhöhen.

Asymmetrische Konzentrationen an Diffusorpartikeln innerhalb des Lichtleiters können beispielsweise durch Anlegen eines elektromagnetischen Felds an den Lichtleiter bei Verwendung von Partikeln mit einem elektrischen und/oder magnetischen Dipolmoment erzeugt werden. Ein geeignetes Material für solche Diffusorpartikel ist beispielsweise Bariumstrontiumtitanat.

Streugeometrien mit definierter Form und Größe innerhalb des Lichtleiters können beispielsweise mittels eines Lasers in dem Lichtleiter erzeugt werden. Solche Streugeometrien können derart ausgebildet sein, dass sie auch im ausgeschalteten Zustand der Flächenlichtquelle für einen Betrachter sichtbar sind und so einen zusätzlichen Designaspekt darstellen.

Weiterhin ist es bei einer Flächenlichtquelle mit indirekter Hinterleuchtung auch möglich, dass die Auskoppelstrukturen durch Vertiefungen in einer der Hauptseiten des Lichtleiters gebildet sind. Bevorzugt sind die Vertiefungen in der zur Leuchtfläche weisenden Hauptfläche des Lichtleiters eingebracht.

Besonders bevorzugt beträgt die Änderung der Leuchtdichte mit dem Ort einen Wert größer oder gleich 100 cd/m², besonders bevorzugt größer oder gleich 1000 cd/m².

Besonders bevorzugt beträgt die relative Änderung der Leuchtdichte mit dem Ort von dem Hintergrundbereich in den Leuchtbereich einen Wert größer oder gleich Faktor 2, besonders bevorzugt einen Wert größer oder gleich Faktor 5.

Weiterhin ist der Leuchtbereich besonders bevorzugt größer oder gleich 300 µm. Besonders bevorzugt ist der Leuchtbereich größer oder gleich 1 mm.

Besonders bevorzugt tritt die Änderung der Leuchtdichte bei der Flächenlichtquelle nicht nur in Abhängigkeit des Orts sondern auch in Abhängigkeit des Betrachtungswinkels auf. Besonders bevorzugt beträgt die Änderung der Leuchtdichte mit dem Winkel einen Wert größer oder gleich 100 cd/m², besonders bevorzugt größer oder gleich 1000 cd/m².

Besonders bevorzugt beträgt die relative Änderung der Leuchtdichte mit dem Winkel von dem Hintergrundbereich in den Leuchtbereich einen Wert größer oder gleich Faktor 2, besonders bevorzugt größer oder gleich Faktor 5.

Besonders bevorzugt findet die Änderung der Leuchtdichte mit dem Betrachtungswinkel über ein Winkel nicht größer als 10° besonders bevorzugt über einen Winkel nicht größer als 5° statt.

Die Flächenlichtquelle kann hierbei einen oder mehrere Halbleiterköper aufweisen. Merkmale, die aus Gründen der Einfachheit vorliegend lediglich in Zusammenhang mit einem Halbleiterköper beschrieben werden, können ebenfalls mit einer Vielzahl von Halbleiterkörpern entsprechend kombiniert werden.

Weitere vorteilhafte Ausführungsformen und Weiterbildungen der Erfindung ergeben sich aus den im Folgenden in Verbindung mit den Figuren beschriebenen Ausführungsbeispielen.

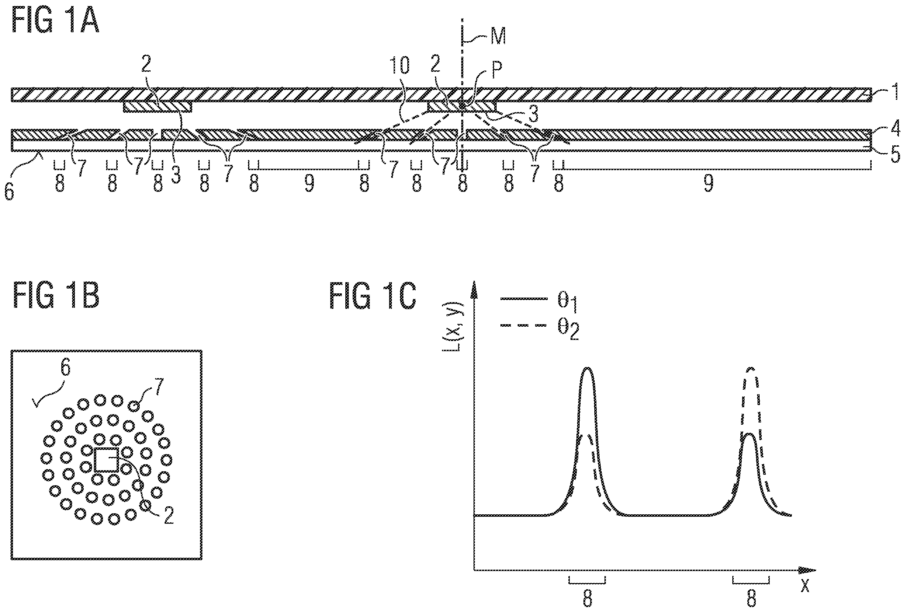

Figur 1A zeigt eine schematische Schnittdarstellung einer Flächenlichtquelle gemäß einem ersten Beispiel.
Figur 1C zeigt eine schematische Darstellung der Leuchtdichte L zweier benachbarter Leuchtbereiche der Flächenlichtquelle gemäß der Figuren 1A und 1B in Abhängigkeit des Orts x für zwei verschiedene Betrachtungswinkel θ₁ und θ₂.
Figur 1B zeigt eine Draufsicht auf einen Ausschnitt der Leuchtfläche der Flächenlichtquelle gemäß Figur 1A.
Figuren 2 und 3 zeigen jeweils eine schematische Schnittdarstellung einer Flächenlichtquelle gemäß zweier Ausführungsbeispiele.
Figur 4A zeigt eine schematische Schnittdarstellung einer Flächenlichtquelle gemäß einem dritten Ausführungsbeispiel.
Figur 4B zeigt eine schematische perspektivische Darstellung der Auskoppelstrukturen der Flächenlichtquelle gemäß Figur 4A.
Figur 5 zeigt eine schematische Draufsicht auf eine Flächenlichtquelle gemäß einem weiteren Beispiel.
Figur 6 zeigt eine schematische Schnittdarstellung einer Flächenlichtquellen gemäß einem weiteren Beispiel.
Figur 7 zeigt eine schematische Darstellung der Leuchtdichte L in Abhängigkeit des Ortes x auf der Leuchtfläche einer Flächenlichtquelle.

In den Ausführungsbeispielen und Figuren sind gleiche oder gleich wirkende Bestandteile jeweils mit den gleichen Bezugszeichen versehen. Die dargestellten Elemente und deren Größeverhältnisse untereinander sind nicht als maßstabsgerecht anzusehen. Vielmehr können einzelne Elemente, insbesondere Schichtdicken, zum besseren Verständnis übertrieben groß dargestellt sein.

Die Flächenlichtquelle gemäß dem Beispiel der Figur 1A weist einen Träger 1 auf, auf den zwei Halbleiterkörper 2 aufgebracht sind, die im Betrieb der Flächenlichtquelle elektromagnetische Strahlung, vorzugsweise sichtbares Licht, von ihrer Vorderseite 3 aussenden. Nachfolgend in Abstrahlrichtung auf die Halbleiterkörper 2 ist eine Streuscheibe 4 angeordnet, auf die eine klare Scheibe 5, beispielsweise aus Glas oder einem durchsichtigen Kunststoff, als Staubschutz aufgebracht ist. Vorliegend bildet die Vorderseite der klaren Scheibe 5 die Leuchtfläche 6 der Flächenlichtquelle aus.

Bei der Flächenlichtquelle gemäß der Figur 1A sind die strahlungsemittierenden Vorderseiten 3 der beiden Halbleiterkörper 2 parallel zu der Leuchtfläche 6 der Flächenlichtquelle angeordnet. Es handelt sich daher um eine Flächenlichtquelle mit direkter Hinterleuchtung.

Die Streuscheibe 4 weist im Bereich der Halbleiterkörper 2 Löcher als Auskoppelstrukturen 7 auf. Wie in Figur 1B zu sehen, sind die Löcher in der Streuscheibe 4 jeweils auf konzentrischen Kreisen um den Halbleiterkörper 2 herum in der Streuscheibe 4 angeordnet.

Die Löcher sind vorliegend zylinderförmig ausgebildet und derart in die Streuscheibe 4 eingebracht, dass ihre Rotationsachsen 10 auf Kegelmänteln liegen. Die Spitzen der Kegelmäntel befinden sich wiederum auf einem gemeinsamen Punkt P der Mittelachse M des jeweiligen Halbleiterkörpers 2. Auf diese Art und Weise kann ein Strahlkegel, der von dem Halbleiterkörper emittiert wird, punktuell durch die Löcher in der Streuscheibe 4 hindurch treten und eine lokale Änderung der Leuchtdichte auf der Leuchtfläche 6 erzeugen.

Bei diesem Beispiel ist somit jedem zylindrischen Loch in der Streuscheibe 4 ein Leuchtbereich 8 auf der Leuchtfläche 6 zugeordnet. Der übrige Teil der Leuchtfläche 6 bildet den Hintergrundbereich 9 aus, in dem bei dem vorliegenden Beispiel keine Auskoppelstrukturen 7 eingebracht sind.

Bei der Flächenlichtquelle gemäß Figur 1A entsteht somit eine Leuchtfläche 6 mit einer Mehrzahl an Leuchtbereichen 8, wobei jedem Leuchtbereich 8 eine Hauptabstrahlrichtung zugeordnet ist, die von der Ausrichtung des Lochs innerhalb der Streuscheibe 4 abhängt. Da die Ausrichtungen der Löcher innerhalb der Streuscheibe 4 verschieden sind, sind auch die Hauptabstrahlrichtungen der Leuchtbereiche 8 voneinander verschieden. Auf diese Art und Weise kann der Glitzereffekt bei der Flächenlichtquelle der Figur 1A besonders stark ausgebildet werden, wie im Folgenden anhand Figur 1C beschrieben.

Figur 1C zeigt eine schematische Darstellung der Leuchtdichte L zweier benachbarter Leuchtbereiche der Flächenlichtquelle gemäß der Figuren 1A und 1B in Abhängigkeit des Orts x für zwei verschiedene Betrachtungswinkel θ₁ (durchgezogene Linie) und θ₂. (gestrichelte Linie). Da die Hauptabstrahlrichtungen der Leuchtbereiche aufgrund der unterschiedlichen Anordnung der Löcher innerhalb der Streuscheibe 4 unterschiedlich sind, unterscheidet sich das Maximum der Leuchtdichte der Leuchtbereiche 8 bei ein und demselben Betrachtungswinkel. Bei Änderung des Betrachtungswinkels, etwa von θ₁ zu θ₂, ändert sich auch das Maximum der Leuchtdichte für die jeweiligen Leuchtbereiche 8.

Weiterhin ist es auch möglich, dass die Löcher in der Streuscheibe 4 kegelförmig oder kegelstumpfförmig ausgebildet sind.

Die Streuscheibe 4 der Flächenlichtquelle der Figur 1A ist bevorzugt dicker als 0,5 mm, besonders bevorzugt dicker als 1 mm. Weiterhin beträgt eine maximale Dicke der Streuscheibe 4 bevorzugt 20 mm und besonders bevorzugt 10 mm.

Der Durchmesser der zylindrischen Löcher liegt im Bereich der Dicke der Streuscheibe 4.

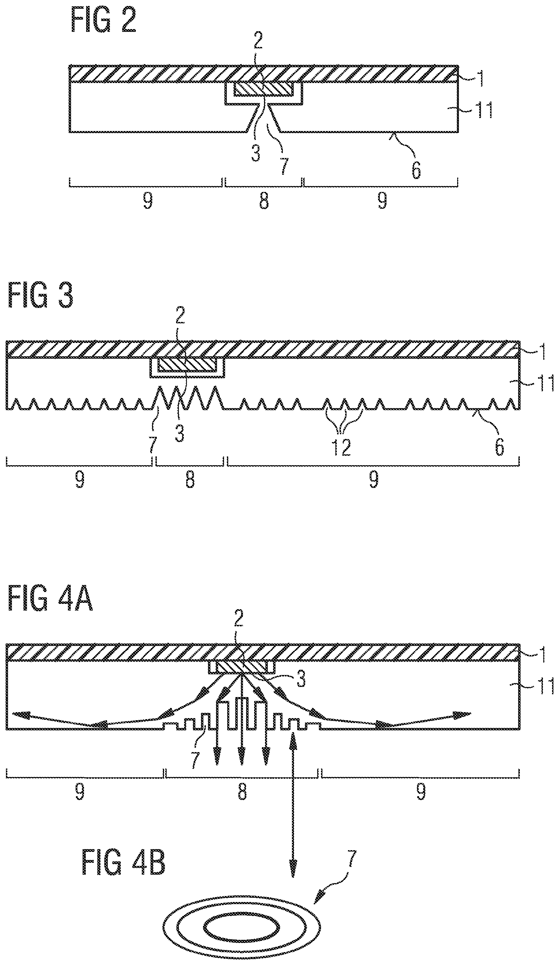

Die Flächenlichtquelle gemäß dem Ausführungsbeispiel der Figur 2 weist einen Halbleiterkörper 2 auf, der auf einem Träger 1 aufgebracht ist. Der Halbleiterkörper 2 ist in einen Lichtleiter 11 eingebettet. Die Leuchtfläche 6 der Flächenlichtquelle wird bei diesem Ausführungsbeispiel durch eine Hauptfläche des Lichtleiters 11 gebildet. Bei der Flächenlichtquelle gemäß der Figur 2 ist die strahlungsemittierende Vorderseite 3 des Halbleiterkörpers 2 parallel zur Leuchtfläche 6 angeordnet. Daher handelt es sich auch bei dem Ausführungsbeispiel der Figur 2 um eine Flächenlichtquelle mit direkter Hinterleuchtung.

Als Auskoppelstruktur 7 weist der Lichtleiter 11 vorliegend ein kegelstumpfförmiges Loch auf, das mittig über der strahlungsemittierenden Vorderseite 3 des Halbleiterkörpers 2 angeordnet ist. Das kegelstumpfförmige Loch dient dazu, Strahlung des Halbleiterkörpers 2 punktuell aus dem Lichtleiter 11 auszukoppeln und so einen Leuchtbereich 8 innerhalb der Leuchtfläche 6 zu erzeugen, der einen Glitzereffekt bei einem menschlichen Betrachter hervorruft. Insbesondere kann aufgrund der kegelstumpfförmigen Ausbildung des Lochs eine starke Änderung der Leuchtdichte in Abhängigkeit des Betrachtungswinkels erzielt werden.

Weiterhin ist zwischen dem Halbleiterkörper 2 und dem Lichtleiter 11 ein luftgefüllter Spalt vorhanden, der auch mit einem durchsichtigen Füllmaterial, wie beispielsweise Epoxidharz oder Silikonharz, gefüllt sein kann.

Der Lichtleiter 11 weist bevorzugt eine Dicke zwischen 1 mm und 10 mm auf, wobei die Grenzen eingeschlossen sind. Die Abmessungen der Auskoppelstrukturen 7, beispielsweise der Durchmesser des oben beschriebenen kegelstumpfförmigen Lochs, liegt bevorzugt im Bereich der Dicke des Lichtleiters 11, also auch zwischen 1 mm und 10 mm, wobei die Grenzen eingeschlossen sind.

Auch die Flächenlichtquelle gemäß dem Ausführungsbeispiel der Figur 3 umfasst wie die Flächenlichtquelle der Figur 2 einen Halbleiterkörper 2, der auf einem Träger 1 aufgebracht ist, wobei der Halbleiterkörper 2 in einen Lichtleiter 11 eingebettet ist. Es handelt sich wie bei der Flächenlichtquelle der Figur 2 um eine Flächenlichtquelle mit direkter Hinterleuchtung.

Über der strahlungsemittierenden Vorderseite 3 des Halbleiterkörpers 2 sind auf der zur Leuchtfläche 6 weisenden Hauptfläche des Lichtleiters 11 Auskoppelstrukturen 7 eingebracht, die einen Leuchtbereich 8 in der Leuchtfläche 6 erzeugen. Die Auskoppelstrukturen 7 sind durch kegelförmige Vertiefungen in dem Lichtleiter 11 gebildet, deren Dimensionen im Bereich der Dicke des Lichtleiters 11 liegen. Seitlich des Halbleiterkörpers 2 im Hintergrundbereich 9 der Leuchtfläche 6 sind weitere Auskoppelstrukturen 12 in der zur Leuchtfläche 6 weisenden Hauptfläche des Lichtleiters 11 angeordnet, die dazu vorgesehen sind, die Abstrahlcharakteristik der Leuchtfläche 6 im Hintergrundbereich 9 möglichst homogen auszugestalten. Diese weiteren im Hintergrundbereich 9 der Leuchtfläche 6 angeordneten Auskoppelstrukturen 12 sind beispielsweise durch Ausnehmungen oder eine Aufrauung gebildet. Sie weisen im Unterschied zu den Auskoppelstrukturen 7, die dazu vorgesehen sind Leuchtbereich hervorzurufen, Dimensionen auf, die bevorzugt zwischen 10 µm und 100 µm liegen, wobei die Grenzen eingeschlossen sind.

Die Flächenlichtquelle gemäß Figur 4A unterscheidet sich von der Flächenlichtquelle gemäß der Figur 2 hinsichtlich der Auskoppelstrukturen 7 in der zur Leuchtfläche 6 weisenden Seite des Lichtleiters 11. Die Auskoppelstrukturen 7 sind wie bei der Flächenlichtquelle gemäß Figur 2 über der strahlungsemittierenden Vorderseite 3 des Halbleiterkörpers 2 angeordnet und dazu vorgesehen einen Leuchtbereich 8 in der Leuchtfläche 6 zu erzeugen. Die Auskoppelstrukturen 7 sind durch zylinderförmige Vertiefungen in der Hauptfläche des Lichtleiters 11 gebildet, deren Tiefe von der Mitte des Halbleiterkörpers 2 zu den Seiten jeweils symmetrisch abfällt.
Wie die Pfeile in Figur 4A andeuten, können die Auskoppelstrukturen punktuell Licht des Halbleiterkörpers 2 aus dem Lichtleiter 11 auskoppeln und gleichzeitig Strahlung, die seitlich oder in einem flachen Winkel von der Vorderseite 3 des Halbleiterkörpers 2 emittiert wird, totalreflektierend in den Lichtleiter 11 hineinführen. Hierdurch wird punktuell in dem Bereich der Auskoppelstrukturen 7 eine starke Auskopplung aus dem Lichtleiter 11 erzeugt und so ein Leuchtbereich 8 mit Glitzereffekt in der Leuchtfläche 6 erzielt, während die Leuchtdichte des Hintergrundbereichs 9 der Leuchtfläche 6 homogenisiert wird.

Figur 4B zeigt die Auskoppelstrukturen 7 in dem Lichtleiter 11 gemäß Figur 4A in einer schematischen perspektivischen Weise. Hier ist zu sehen, dass die Vertiefungen in dem Lichtleiter 11 in durchgehenden konzentrischen Kreisen um den Halbleiterkörper 2 in die Hauptfläche des Lichtleiters 11 eingebracht sind.

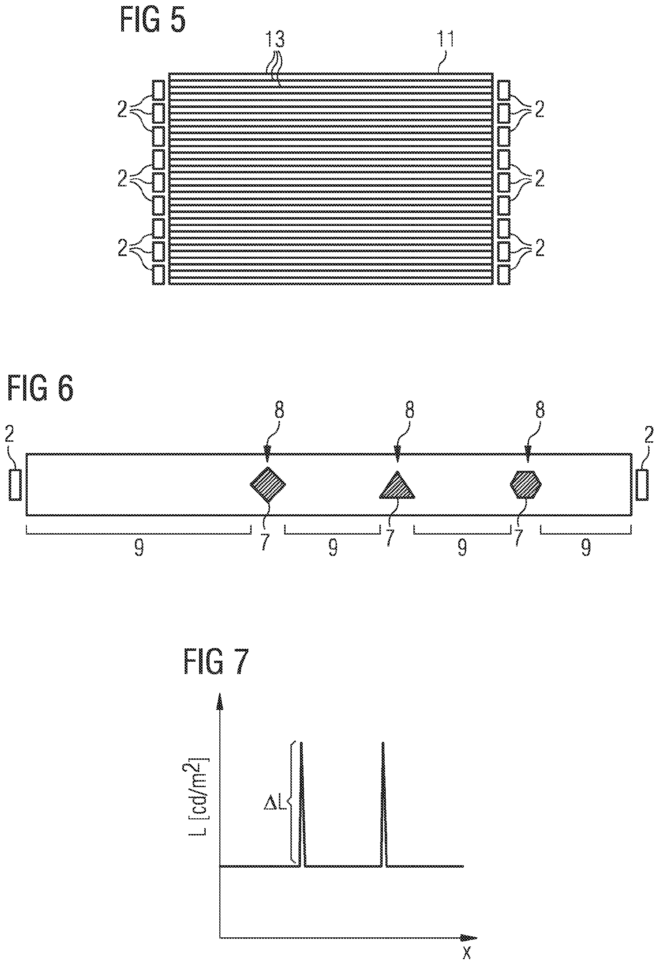

Die Flächenlichtquelle gemäß dem Beispiel der Figur 5 weist einen Lichtleiter 11 auf, wobei an jeder Seite des Lichtleiters 11 mehrere Halbleiterkörper 2 angeordnet sind, die in den Lichtleiter 11 einkoppeln. Die Halbleiterkörper 2 sind somit vorliegend seitlich der Leuchtfläche 6 angeordnet, die bei der Flächenlichtquelle der Figur 5 durch eine Hauptfläche des Lichtleiters 11 gebildet ist. Bei der Flächenlichtquelle der Figur 5 handelt es sich somit um eine Flächenlichtquelle mit indirekter Hinterleuchtung.

Der Lichtleiter 11 der Flächenlichtquelle gemäß Figur 5 weist Streustellen als Auskoppelstrukturen 7 auf, die vorliegend durch Diffusorpartikel gebildet sind. Die Diffusorpartikel sind in den Lichtleiter 11 derart eingebracht, dass linienförmige Bereiche 13 mit einer hohen Konzentration an Diffusorpartikel entstehen. Die Diffusorpartikel erhöhen die Lichtauskopplung aus dem Lichtleiter 11 und erzeugen so linienförmige Leuchtbereiche 8 in der Leuchtfläche 6, wobei die linienförmigen Leuchtbereiche 8 in der Regel eine größere Breite als die linienförmigen Bereiche 13 mit Diffusorpartikeln aufweisen. Liegt die Breite der linienförmigen Bereiche 13 mit Diffusorpartikeln im Bereich einiger 100 µm, so liegt die Breite der linienförmigen Leuchtbereiche 8 im Bereich einiger mm. Der Abstand der linienförmigen Bereiche 13 mit Diffusorpartikeln liegt bevorzugt im Bereich der Dicke der Lichtleiters 11, das heißt, zwischen 1 mm und 10 mm.

Die linienförmigen Bereiche 13 mit Diffusorpartikeln sind jeweils leicht versetzt zu den Hauptabstrahlachsen der Halbleiterkörper 2 angeordnet. Auf diese Art und Weise kann die Homogenität der Flächenlichtquelle im Hintergrundbereich 9 der Leuchtfläche 6 vorteilhafterweise erhöht werden. Eine ungleichmäßige Diffusorpartikelkonzentration, etwa in linienförmige Bereiche 13, kann beispielsweise mittels Diffusorpartikeln erzeugt werden, die ein Dipolmoment aufweisen. Bei Verwendung solcher Diffusorpartikel wird bei der Herstellung des Lichtleiters 11 ein elektromagnetisches Feld angelegt, sodass sich die Diffusorpartikel innerhalb des Lichtleiters 11 auf eine gewünschte Art und Weise anordnen.

Anstelle von Diffusorpartikeln zur Bildung der Auskoppelstrukturen 7 können auch thermisch oder optisch erzeugte Leerstellen bzw. Defekte oder luftgefüllte Partikel in dem Lichtleiter 11 eingesetzt werden. Weiterhin können zur Bildung der Auskoppelstrukturen 7 auch kleine Eindrücke in einer der Hauptflächen des Lichtleiters 11 verwendet werden, wobei die Eindrücke beispielsweise prismenförmig ausgebildet sind.

Die Flächenlichtquelle gemäß Figur 6 weist ebenfalls eine indirekte Hinterleuchtung auf. In den Lichtleiter 11 der Flächenlichtquelle der Figur 6 sind als Auskoppelstrukturen 7 Streugeometrien eingebracht, von denen eine würfelförmig, eine oktoederförmig und eine pyramidenförmig ausgebildet ist. Diese Streugeometrien können mit definierter Form und Größe beispielsweise mit Hilfe von Laserstrukturierung in einen Lichtleiter 11 aus PMMA oder Glas eingearbeitet werden. Solche Streugeometrien sind bevorzugt kleiner oder gleich 1 mm, besonders bevorzugt kleiner oder gleich 100 um.

Alternativ ist es auch möglich, dass die Streugeometrien durch separate Partikel in dem Lichtleiter 11 gebildet sind, wobei die Partikel bevorzugt eine der oben beschriebenen Geometrien aufweisen. Diese Partikel sind bevorzugt kleiner oder gleich 30 µm.

Die Streugeometrien sind dazu geeignet, als Auskoppelstrukturen 7 zu dienen und punktuell Licht aus dem Lichtleiter 11 derart auszukoppeln, das im Betrieb der Flächenlichtquelle ein Leuchtbereich 8 entsteht, wobei der Leuchtbereich 8 eine Leuchtdichte aufweist, die gegenüber einem Hintergrundbereich 9 erhöht ist. Diese Streugeometrien können derart ausgebildet sein, dass sie auch im ausgeschalteten Zustand sichtbar sind und so einen positiven Designaspekt darstellen.

Figur 7 zeigt schematisch die Leuchtdichte 1 in Abhängigkeit des Orts x auf der Leuchtfläche 6 einer Flächenlichtquelle, wie sie beispielsweise in Figur 1 dargestellt ist. Eine solche Leuchtdichte L ist dazu geeignet einen Glitzereffekt für das menschliche Auge hervorzurufen. In den Bereichen der Halbleiterkörper 2 weist die Leuchtdichte L jeweils ein lokales Maximum auf, das lokal eng begrenzt ist. Die Breite der lokalen Maximas beträgt bevorzugt ca. 300 um. Diese lokalen Maxima stellen die Leuchtbereiche 8 der Leuchtfläche 6 dar. Außerhalb der Leuchtbereiche 6, also im Hintergrundbereich 9 ist die Leuchtdichte bevorzugt möglichst homogen ausgebildet. Die Leuchtdichte L beträgt im Hintergrundbereich 9 bevorzugt einen Wert von mindestens 10 cd/m². Die lokale Änderung der Leuchtdichte ΔL beträgt bevorzugt mindestens 100 cd/m², besonders bevorzugt mindestens 1000 cd/m².
Diese Anmeldung beansprucht die Priorität der deutschen Anmeldung DE 10 2010 018 030.0.

## Patentansprüche

1. Flächenlichtquelle mit einer Leuchtfläche (6), umfassend:
- mindestens einen Halbleiterkörper (2), der im Betrieb elektromagnetische Strahlung von seiner Vorderseite (3) emittiert, und
- Auskoppelstrukturen (7), die dazu geeignet sind, eine lokale Änderung der Leuchtdichte auf der Leuchtfläche 6 zu erzeugen, so dass die Leuchtdichte 6 in zumindest einem Leuchtbereich (8) gegenüber einem Hintergrundbereich (9) erhöht ist,
dadurch charakterisiert, dass
- die strahlungsemittierende Vorderseite (3) des Halbleiterkörpers (2) parallel zu der Leuchtfläche (6) der Flächenlichtquelle angeordnet ist, und
- der Halbleiterkörper (2) in einen Lichtleiter (11) eingebettet ist und die Auskoppelstrukturen (7) auf der zur Leuchtfläche (6) weisenden Seite des Lichtleiters (11) im Bereich der strahlungsemittierenden Vorderseite (3) des Halbleiterkörpers (2) angeordnet sind.

2. Flächenlichtquelle nach dem vorherigen Anspruch, bei der die Auskoppelstrukturen (7) durch eines der folgenden Elemente gebildet sind: Zylindrische Ausnehmungen, pyramidenförmige Ausnehmungen, kegel- oder kegelstumpfförmige Ausnehmungen, zylindrische Löcher, pyramidenförmige Löcher, kegel- oder kegelstumpfförmige Löcher, Aufrauung, abbildende Strukturen, wie beispielsweise Fresnel-Strukturen.

3. Flächenlichtquelle nach einem der obigen Ansprüche, bei der die Elemente, die die Auskoppelstrukturen (7) bilden, eine Rotationsachse aufweisen, die schräg zur Leuchtfläche (6) verläuft.

4. Flächenlichtquelle nach einem der obigen Ansprüche, bei der die lokale Änderung der Leuchtdichte größer oder gleich 1000 cd/m² ist.

5. Flächenlichtquelle nach einem der obigen Ansprüche, bei der der Leuchtbereich (8) größer oder gleich 300 µm ist.

6. Flächenlichtquelle nach einem der obigen Ansprüche, bei der die Änderung der Leuchtdichte (L) auch in Abhängigkeit des Betrachtungswinkels auftritt.

7. Flächenlichtquelle nach dem vorherigen Anspruch, bei der die Änderung der Leuchtdichte (L) mit dem Betrachtungswinkel über ein Winkel nicht größer als 10° stattfindet.

8. Flächenlichtquelle nach einem der obigen Ansprüche, bei der der Hintergrundbereich (9) eine möglichst homogene Leuchtdichte (L) aufweist.

9. Flächenlichtquelle nach einem der obigen Ansprüche, bei der zwischen Halbleiterkörper (2) und Lichtleiter (11) ein Luftspalt vorhanden ist.

10. Flächenlichtquelle nach dem vorherigen Anspruch, bei der der Luftspalt zwischen 5 Mikrometer und 1000 Mikrometer breit ist, wobei die Grenzen eingeschlossen sind.

11. Flächenlichtquelle nach einem der Ansprüche 1 bis 8, bei der ein Spalt zwischen Halbleiterkörper (1) und Lichtleiter (11) mit einem Kleber, einem Silikonmaterial oder einem Epoxidmaterial gefüllt ist.

12. Flächenlichtquelle nach einem der obigen Ansprüche, bei der die relative Änderung der Leuchtdichte (L) mit dem Ort von dem Hintergrundbereich (9) in den Leuchtbereich (8) einen Wert größer oder gleich Faktor 2 aufweist.

13. Flächenlichtquelle nach einem der obigen Ansprüche, bei der die relative Änderung der Leuchtdichte (L) mit dem Winkel von dem Hintergrundbereich (9) in den Leuchtbereich (8) einen Wert größer oder gleich Faktor 2 aufweist.

14. Flächenlichtquelle nach einem der obigen Ansprüche, bei der die Änderung der Leuchtdichte (L) mit dem Winkel einen Wert größer oder gleich 1000 cd/m² beträgt.

15. Flächenlichtquelle nach einem der obigen Ansprüche, die eine Vielzahl an Halbleiterkörper (1) aufweist.

## Claims

1. A surface light source with a lighting surface (6), comprising:
- at least one semiconductor body (2) which emits electromagnetic radiation from its front side (3) during operation, and
- output coupling structures (7) which are suitable for producing a local variation of the light density on the lighting surface 6, so that the light density 6 is increased in at least one illumination region (8) with respect to a background region (9)
**characterized in that**
- the radiation-emitting front side (3) of the semiconductor body (2) is arranged parallel to the lighting surface (6) of the surface light source, and
- the semiconductor body (2) is embedded in a light guide (11) and the output coupling structures (7) are arranged on the side of the light guide (11) facing the lighting surface (6) in the region of the radiation-emitting front side (3) of the semiconductor body (2).

2. The surface light source according to the preceding claim, wherein the output coupling structures (7) are formed by one of the following elements: cylindrical recesses, pyramidal recesses, conical or frustoconical recesses, cylindrical holes, pyramidal holes, conical or frustoconical holes, roughening, imaging structures, for example Fresnel structures.

3. The surface light source according to one of the preceding claims, wherein the elements which form the output coupling structures (7) have an axis of rotation which extends obliquely with respect to the lighting surface (6).

4. The surface light source according to one of the preceding claims, wherein the local variation of the light density is greater than or equal to 1000 cd/m².

5. The surface light source according to one of the preceding claims, wherein the illumination region (8) is greater than or equal to 300 µm.

6. The surface light source according to one of the preceding claims, wherein the variation of the light density (L) also takes place as a function of the observation angle.

7. The surface light source according to the preceding claim, wherein the variation of the light density (L) with the observation angle takes place over an angel not exceeding 10°.

8. The surface light source according to one of the preceding claims, wherein the background region (9) has a light density (L) which is as homogeneous as possible.

9. The surface light source according to one of the preceding claims, wherein an air gap between the semiconductor body (2) and the light guide (11) is present.

10. The surface light source according to the preceding claim, wherein the air gap is between 5 micrometer and 1000 micrometer broad, inclusive the limits.

11. The surface light source according to one of claims 1 to 8, wherein an air gap between semiconductor body (2) and light guide (11) is filled with an adhesive, a silicone material or an epoxy material.

12. The surface light source according to one of the preceding claims, wherein the relative variation of the light density (L) with the place from the background region (9) in the illumination region (8) has a value equal to or greater than a factor 2.

13. The surface light source according to one of the preceding claims, wherein the relative variation of the light density (L) with the angle from the background region (9) in the illumination region (8) has a value equal to or greater than a factor 2.

14. The surface light source according to one of the preceding claims, wherein the local variation of the light density with the angle has a value greater than or equal to 1000 cd/m².

15. The surface light source according to one of the preceding claims, comprising a plurality of semiconductor bodies (1).

## Revendications

1. Source de lumière plane présentant une surface lumineuse (6), comprenant :
- au moins un corps semi-conducteur (2) qui émet, en fonctionnement, un rayonnement électromagnétique depuis son côté frontal (3), et
- des structures de découplage (7), qui conviennent pour la génération d'un changement local de luminance sur la surface lumineuse 6, de façon à augmenter la luminance 6 dans au moins une zone lumineuse (8) par rapport à une zone d'arrière-plan (9),
**caractérisée en ce que**
- le côté frontal (3) du corps semiconducteur (2) émettant un rayonnement est agencé parallèlement par rapport à la surface lumineuse (6) de la source de lumière plane, et
- le corps semiconducteur (2) est intégré dans un guide de lumière (11) et les structures de découplage (7) sont agencées sur le côté dirigé vers la surface lumineuse (6) du guide de lumière (11) dans la plage du côté frontal (3) du corps semiconducteur (2) émettant un rayonnement.

2. Source de lumière plane selon la revendication précédente, dans laquelle les structures de découplage (7) sont formées par l'un des éléments suivants : évidements cylindriques, évidements pyramidales, évidements coniques ou tronconiques, trous cylindriques, trous pyramidaux, trous coniques ou tronconiques, rugosité, des structures formant images, telles que, par exemple, des structures de Fresnel.

3. Source de lumière plane selon l'une quelconque des revendications précédentes, dans laquelle les éléments qui forment les structures de découplage (7), présentent un axe de rotation, qui s'étend de manière oblique par rapport à la surface lumineuse (6).

4. Source de lumière plane selon l'une quelconque des revendications précédentes, dans laquelle le changement local de luminance est supérieur ou égal à 1000 cd/m².

5. Source de lumière plane selon l'une quelconque des revendications précédentes, dans laquelle la zone lumineuse (8) est supérieure ou égale à 300 µm.

6. Source de lumière plane selon l'une quelconque des revendications précédentes, dans laquelle le changement de luminance (L) se produit également en fonction de l'angle de vue.

7. Source de lumière plane selon la revendication précédente, dans laquelle le changement de luminance (L) avec l'angle de vue a lieu sur un angle qui ne dépasse pas 10°.

8. Source de lumière plane selon l'une quelconque des revendications ci-dessus, dans laquelle la zone d'arrière-plan (9) présente une luminance (L) aussi homogène que possible.

9. Source de lumière plane selon l'une quelconque des revendications précédentes, dans laquelle un entrefer est présent entre le corps semi-conducteur (2) et le guide de lumière (11).

10. Source de lumière plane selon la revendication précédente, dans laquelle l'entrefer présente une largeur comprise entre 5 micromètres et 1000 micromètres, limites incluses.

11. Source de lumière plane selon l'une quelconque des revendications 1 à 8, dans laquelle un espace entre le corps semiconducteur (1) et le guide de lumière (11) est rempli d'un adhésif, d'un matériau à base de silicone ou d'un matériau époxy.

12. Source de lumière plane selon l'une quelconque des revendications précédentes, dans laquelle le changement relatif de luminance (L) présente, avec le lieu de la zone d'arrière-plan (9) dans la zone lumineuse (8), une valeur supérieure ou égale au facteur 2.

13. Source de lumière plane selon l'une quelconque des revendications précédentes, dans laquelle le changement relatif de luminance (L) présente, avec l'angle de la zone d'arrière-plan (9) dans la zone lumineuse (8), une valeur supérieure ou égale au facteur 2.

14. Source de lumière plane selon l'une quelconque des revendications précédentes, dans laquelle le changement de luminance (L) avec l'angle s'élève à une valeur supérieure ou égale à 1000 cd/m².

15. Source de lumière plane selon l'une quelconque des revendications précédentes, qui présente une pluralité de corps semiconducteurs (1).
